# EUROPEAN PATENT SPECIFICATION

(11) **EP 4 114 142 B1**
(45) Date of publication and mention of the grant of the patent: **10.12.2025**
(21) Application number: 21182074.1
(22) Date of filing: 28.06.2021
(51) Int. Cl.: H05B 6/10, H02G 1/14, H02G 1/16

(54) **INDUCTION HEATING SYSTEM AND METHOD FOR INSULATION SYSTEM RESTORATION OF A POWER CABLE**
INDUKTIONSHEIZSYSTEM UND VERFAHREN ZUR ISOLIERUNGSSYSTEMWIEDERHERSTELLUNG EINES STROMKABELS
SYSTÈME ET PROCÉDÉ DE CHAUFFAGE PAR INDUCTION POUR LA RESTAURATION DU SYSTÈME D'ISOLATION D'UN CÂBLE ÉLECTRIQUE

(43) Date of publication of application: 04.01.2023
(73) Proprietor: NKT HV Cables AB, 371 60 Lyckeby (SE)
(72) Inventor: GUSTAFSSON, Kristian, Karlskrona (SE); ANTONISCHKI, Jörn, Lyckeby (SE)
(74) Representative: Kransell & Wennborg KB

(56) References cited:
- JP-A- H10 233 279
- JP-A- S61 243 680
- US-A- 2 649 527
- US-A1- 2018 191 142

## Description

### TECHNICAL FIELD

The present disclosure generally relates to power cable jointing and equipment for the same.

### BACKGROUND

During power cable manufacturing, it may be necessary to joint two cable lengths. This may for example be as a result of limitations on the maximum continuous cable length that can be produced in the factory, or because of unintended cable cuts.

When two cable lengths are joined in the factory, all the cable layers are removed down to the conductors at the cable ends. The conductor ends are then joined, for example by welding, thus forming a conductor joint. The insulation system around the conductor joint is then rebuilt layer by layer. This is usually done by winding tape layer by layer. The insulation systems of the two cable ends are connected to the joint insulation system. Before the rebuilding process commences, the insulation system of the cable ends may be pencilled, i.e. shaped conically tapering towards the conductor joint. The insulation system is restored in the same way in case a cable has been damaged during handling and needs to be repaired.

A device can be used for cross-linking the tape layers of the joint insulation system, or the restored insulation system of a cable that has been damaged. The joint insulation system is in this case placed inside the device, and heated under pressure such that material in the tape layers melt together and become cross-linked without the creation of voids.

JPS61243680 A discloses a heating method for crosslinking or extrusion moulding a polyolefin insulation in a joint of a crosslinked polyethylene insulated cable. A pressure medium such as nitrogen gas is used to pressurise the mould. The mould has a heater equipped with a heating control device. The heater raises the temperature for crosslinking. At the same time, highfrequency induction coils are provided on both ends of the mould and a highfrequency temporary current is supplied to the coils from an alternating power supply to heat the cable conductor.

### SUMMARY

One drawback with using a device of this type is that the conductor acts as a heat sink. The heating is thus not homogeneous when the insulation layers are heated by the device.

A general object of the present invention is to provide a method of restoring the insulation system of a power cable using an induction heating system, which solves or at least mitigates the problems of the prior art.

The invention achieves this object with the method according to claim 1.

There is hence according to a first aspect of the present disclosure provided an induction heating system for heating a conductor of a power cable to restore an insulation system of the power cable, wherein the induction heating system comprises: a first high frequency, HF, coil configured to receive the power cable, a water-cooling system configured to cool the first HF coil, and a power supply system configured to power the first HF coil, wherein the first HF coil is configured to be openable or splitable into at least two parts.

The induction heating system induces a current into the conductor when the power cable is placed inside the first HF coil and the power supply system generates an alternating current, which induces a current in the conductor. The conductor is thus heated by the induced current. This heating facilitates cross-linking of an uncured restoration insulation system layer arranged around a conductor or heating a thermoplastic restoration insulation system layer arranged around a conductor such that the thermoplastic melts. The conductor will thus not act as a heat sink but instead heat the restoration insulation system layer from underneath or from inside.

A pressurisation and heating device may heat the restoration insulation system layer from outside. The pressurisation and heating device may comprise a heater integrated into or configured to be arranged or fitted inside the device. The restoration insulation system layer can thus be heated from the outside by means of the pressurisation and heating device and from the inside by means of the induction heating system. The heating/cross-linking can thus become more homogeneous in the radial direction.

The terms "cross-linking" and "curing" are used interchangeably herein. It follows that the terms "cross-linked" and "cured" are also interchangeable.

With "splitable" is meant that the first HF coil is configured to be disassembled into two or more than two parts, for example at least three parts, or at least four parts. The first HF coil can thus be assembled around a power cable and disassembled into several parts so as to enable removing the first HF coil from the power cable. The parts may in this case be configured to be completely disassembled from each other, for example by removing screws or bolts holding the parts together.

According to one embodiment the first HF coil comprises a first coil part having a first end and a second coil part having a first end, the first end of the first coil part being configured to be connected to the first end of the second coil part, and wherein the first end of the first coil part is mechanically disconnectable from the first end of the second coil part. The first HF coil may thereby be opened, or disassembled, or assembled around a power cable.

The first coil part may be a first coil section. The second coil part may be a second coil section.

The first coil part and the second coil part may form a first loop of the first HF coil. The first HF coil may thus be formed by the first coil part and the second coil part. Alternatively, the first HF coil may comprise more than two coil parts that can be disconnected from each other.

The first HF coil is configured to be opened by disconnecting the first end of the first coil part from the first end of the second coil part.

The first HF coil is configured to be closed by connecting the first end of the first coil part from the first end of the second coil part.

The first HF coil can when open be placed around the power cable prior to curing or heating. The first HF coil can then be closed around the power cable to enable current to flow in the first HF coil. Finally, the first HF coil can be opened and removed from the power cable in a simple manner after curing.

According to one embodiment the first coil part has a second end having a pivot connection to enable rotation of the first coil part away from the second coil part when the first ends of the first coil part and the second coil part have been disconnected from each other.

The second end of the second coil part may have a pivot connection to enable rotation of the second coil part away from the first coil part when the first ends of the first coil part and the second coil part have been disconnected from each other.

According to one embodiment the first HF coil comprises a latch configured to lock the first end of the first coil part to the first end of the second coil part. The first HF coil can thus be locked to keep it closed when the first HF coil is in use.

According to one embodiment the first coil part and the second coil part are hollow, wherein the water-cooling system comprises a first water pipe connected to the first coil part and a second water pipe connected to the second coil part for flowing water through the first coil part and the second coil part.

Cooling water can thus directly contact the inner surface of the first HF coil for efficient cooling.

Alternatively, the water-cooling system may comprise cooling pipe elements configured to be arranged on the external surface of the first HF coil and the second HF coil for cooling the first HF coil and the second HF coil.

The water-cooling system may comprise a first intermediate water pipe which is connected to the second end of the first coil part and to the second end of the second coil part, bridging the first coil part and the second coil part.

Alternatively, the first coil part and the second coil part may have separate water flows. In this case a first water flow passes through the first coil part and separate second water flow passes through the second coil part. The cooling may thus become more efficient because both coil parts will receive fresh cold water of the same or similar temperature.

One embodiment comprises a second HF coil configured to receive the power cable, wherein the power supply system is configured to power the second HF coil, and wherein the second HF coil is configured to be openable or splitable into at least two parts.

The power supply system may comprise one or more power supplies. According to one example a single power supply may be configured to power both the first HF coil and the second HF coil. According to another example, the first HF coil is powered by a first power supply and the second HF coil is powered by a second power supply.

According to one embodiment the water-cooling system is configured to cool the second HF coil, wherein the second HF coil has a third coil part and a fourth coil part, each having a respective first end, the first end of the third coil part being configured to be connected to the first end of the fourth coil part, and wherein the first end of the third coil part is mechanically disconnectable from the first end of the fourth coil part. The second HF coil may thereby be opened, or disassembled, or assembled around a power cable.

The third coil part may be a third coil section. The fourth coil part may be a fourth coil section.

The first HF coil and the second HF coil may thus be arranged on a respective side of a conductor joint to obtain more homogeneous heating and curing.

The second HF coil is configured to be opened by disconnecting the first end of the third coil part from the first end of the fourth coil part.

The second HF coil is configured to be closed by connecting the first end of the third coil part from the first end of the third coil part.

According to one embodiment the second end of the third coil part has a pivot connection to enable rotation of the third coil part away from the fourth coil part when the first ends of the third coil part and the fourth coil part have been disconnected from each other.

The second end of the fourth coil part may have a pivot connection to enable rotation of the fourth coil part away from the third coil part when the first ends of the third coil part and the fourth coil part have been disconnected from each other.

According to one embodiment the second HF coil comprises a latch configured to lock the first end of the third coil part to the first end of the fourth coil part.

According to one embodiment the third coil part and the fourth coil part are hollow, wherein the water-cooling system comprises a third water pipe connected to the third coil part and a fourth water pipe connected to the fourth coil part for flowing water through the third coil part and the fourth coil part.

The water-cooling system may comprise a second intermediate water pipe which is connected to the second end of the third coil part and to the second end of the fourth coil part, bridging the third coil part and the fourth coil part.

Alternatively, the third coil part and the fourth coil part may have separate water flows. In this case a third water flow passes through the third coil part and separate fourth water flow passes through the fourth coil part.

According to one embodiment the power supply system is configured to generate an alternating current with a frequency in the kilohertz range.

There is according to a second aspect of the present disclosure provided a method of restoring an insulation system around a conductor of a power cable, using the induction heating system of the first aspect, the method comprising: a) placing a pressurisation and heating device around a power cable having a restoration insulation system layer arranged around the conductor, b) opening and placing the first HF coil around the power cable adjacent to the pressurisation and heating device, c) closing the first HF coil, and d) heating the restoration insulation system layer by outer heating of the restoration insulation system layer inside the pressurisation and heating device and by inner heating of the restoration insulation system layer provided by feeding the first HF coil with current from the power supply system inducing a current in the conductor.

An effect obtainable thereby is more homogeneous heating of the restoration insulation system layer, provided by both outer and inner heating. Curing may thereby also be made more homogeneous.

The first HF coil is arranged at a side of the pressurisation and heating device. Typically, the first HF coil is arranged at most 2-2.5 m from the conductor joint, such as 1-2 m from the conductor joint, for example 0.8-1 m from the conductor joint.

One embodiment comprises e) opening the first HF coil after step d) and removing the first HF coil from the power cable.

One embodiment comprises: opening and placing the second HF coil around the power cable adjacent to the pressurisation and heating device, wherein the first HF coil and the second HF coil are arranged at a respective side of the pressurisation and heating device, wherein step d) involves feeding the second HF coil with current from the power supply system.

Typically, the second HF coil is arranged at most 2-2.5 m from the conductor joint, such as 1-2 m from the conductor joint, for example 0.8-1 m from the conductor joint.

More homogeneous heating may thus be obtained in the axial direction because the conductor is heated from both sides of the conductor joint and the uncured insulation system layer extends axially in both directions from the conductor joint.

The method comprises performing steps a)-d) for each of a plurality of restoration insulation system layers.

Typically, the first restoration insulation system layer applied to the conductor over the conductor joint, or over a section of a conductor typically without a conductor joint in case of restoration of an insulation system of a damaged cable, is an inner semiconducting layer. In case of a restoration of the insulation system of a damaged cable, the insulation system is stripped down to the conductor similarly as during jointing before the restoration of the insulation system begins. The inner semiconducting layer comprises a polymer such as polyethylene or polypropylene, and conductive particles such as carbon black. The inner semiconducting layer may be made of a tape that is wound over the conductor such that it overlaps with the inner semiconducting layer of each of the two cable lengths that are being jointed, or with the inner semiconducting layer at both sides of stripped insulation system in case of restoring a damaged power cable. The tape may comprise a cross-linking agent. Steps a)-d) are then performed.

Next, after first insulation system layer has been heated and has cooled down, a second restoration insulation system layer is applied over the inner semiconducting layer after the pressurisation and heating device has been opened. The second restoration insulation system layer is an insulation layer which is applied such that it overlaps with the insulation layer of each of the two cable lengths that are joined or with the insulation layer at both sides of stripped insulation system in case of restoring a damaged power cable. The insulation layer comprises a polymer such as polyethylene or polypropylene. The insulation layer is typically applied by taping. The tape may comprise a cross-linking agent. Steps a)-d) are then performed.

Finally, after the second insulation system layer has been heated and has cooled down, a third restoration insulation system layer is applied over the insulation layer after the pressurisation and heating device has been opened. The third restoration insulation system layer is an outer semiconducting layer. The outer semiconducting layer comprises a polymer such as polyethylene or polypropylene, and conductive particles such as carbon black. The outer semiconducting layer may be made of a tape that is wound over the insulation layer such that it overlaps with the outer semiconducting layer of each of the two cable lengths that are being jointed or with the outer semiconducting layer at both sides of stripped insulation system in case of restoring a damaged power cable. Steps a)-d) are then performed. The insulation system of the power cable has thus been rebuilt.

Instead of taping, the restoration insulation system layers may be formed for example by means of injection moulding.

According to one embodiment in step d) the outer heating and the inner heating are performed simultaneously. The heating/curing may thus be made more homogeneously in the radial direction.

Generally, all terms used in the claims are to be interpreted according to their ordinary meaning in the technical field, unless explicitly defined otherwise herein. All references to "a/an/the element, apparatus, component, means, etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
Fig. 1 schematically shows an example of an induction heating system;
Fig.2 schematically shows a close-up view of an HF coil;
Fig. 3 schematically shows a longitudinal part of a power cable with a power cable joint arranged in a pressurisation and heating device; and
Fig. 4 is a flowchart of a method of restoring the insulation system of a power cable.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

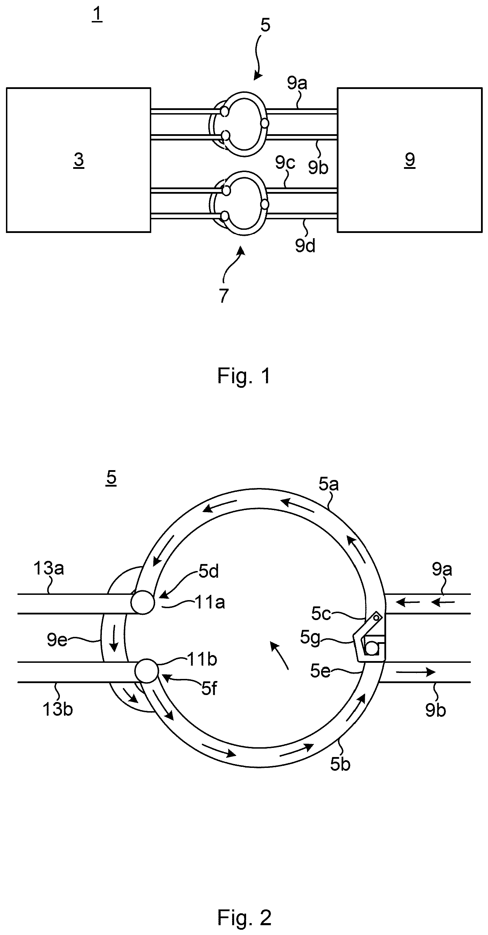

Fig. 1 depicts an example of an induction heating system 1. The induction heating system 1 is adapted for heating a conductor of a power cable when restoring an insulation system of the power cable.

The induction heating system 1 comprises a power supply system 3. The power supply system 3 is configured to generate an alternating current with a frequency in the kilohertz range. The power supply system 3 may for example be configured to generate an alternating current with a frequency in the range 1-500 kHz, or 5-300 kHz.

The induction heating system 1 comprises a first HF coil 5.

The power supply system 3 is connected to the first HF coil 5 and is configured to power the first HF coil 5. The power supply system 3 is configured to feed alternating current to the first HF coil 5.

The first HF coil 5 is openable. The first HF coil 5 is configured to be opened to enable placement of a power cable inside the first HF coil 5.

The induction heating device 1 comprises a second HF coil 7.

The power supply system 3 is connected to the second HF coil 7 and is configured to power the second HF coil 7. The power supply system 3 is configured to feed alternating current to the second HF coil 7.

The second HF coil 7 is openable. The second HF coil 7 is configured to be opened to enable placement of a power cable inside the second HF coil 7.

Although the induction heating system 1 in the present example comprises two HF coils 5, 7, it is envisaged that in some examples the induction heating system may comprise only one HF coil.

The induction heating system 1 comprises a water-cooling system 9 configured to cool the first HF coil 5. The water-cooling system 9 is configured to cool the second HF coil 7.

The water-cooling system 9 may comprise a single cooling system configured to cool the first HF coil 5 and the second HF coil. Alternatively, the water-cooling system 9 may comprise a first sub-cooling system configured to cool the first HF coil 5 and a separate second sub-cooling system configured to cool the second HF coil 7.

The first HF coil 5 is hollow. The water-cooling system 9 comprises a first water pipe 9a and a second water pipe 9b configured to be connected to the hollow first HF coil 5.The water-cooling system 9 is configured to flow water inside the first HF coil 5 by means of the first water pipe 9a and the second water pipe 9b. The first water pipe 9a may be an inlet pipe and the second water pipe 9b may be an outlet pipe.

The second HF coil 7 is hollow. The water-cooling system 9 comprises a third water pipe 9c and a fourth water pipe 9d configured to be connected to the hollow second HF coil 7. The water-cooling system 9 is configured to flow water inside the second HF coil 7 by means of the third water pipe 9c and the fourth water pipe 9c. The third water pipe 9c may be an inlet pipe and the fourth water pipe 9d may be an outlet pipe.

Fig. 2 shows a close-up sideview of the first HF coil 5. The second HF coil 7 has the same general structure as the first HF coil 5 concerning the features described.

The first HF coil 5 has a first coil part 5a and a second coil part 5b. In the example, the first coil part 5a forms one half of the first HF coil 5 and the second coil part 5b forms the other half of the first HF coil 5.

The first coil part 5a has a first end 5c and a second end 5d. The second coil part 5b has a first end 5e and a second end 5f.

The first coil part 5a may be hollow between the first end 5c and the second 5d. The end faces at the first end 5c and the second end 5d may be closed.

The second coil part 5b may be hollow between the first end 5e and the second 5f. The end faces at the first end 5e and the second end 5f may be closed.

The first end 5c of the first coil part 5a is configured to be connected to the first end 5e of the second coil part 5b. The first end 5c of the first coil part 5a is disconnectable from the first end 5e of the second coil part 5b. The first end 5c of the first coil part 5a can thus be connected to and disconnected from the first end 5e of the second coil part 5b. The first HF coil 5 can thus be opened by disconnecting the first end 5c of the first coil part 5a from the first end 5e of the second coil part 5b.

The induction heating system 1 may comprise a rigid first electrical conductor 13a connected to the power supply system 3. The first coil part 5a may be pivotally connected to the first electrical conductor 13a. The second end 5d of the first coil part 5a may have a pivot connection 11a with the first electrical conductor 13a.

The induction heating system 1 may comprise a rigid second electrical conductor 13b connected to the power supply system 3. The second coil part 5b may be pivotally connected to the second electrical conductor 13b. The second end 5f of the second coil part 5b may have a pivot connection 11b with the second electrical conductor 13b.

Alternatively, only the first coil part could be configured to pivot.

The first electrical conductor could alternatively be connected pivotally or rigidly to any point of the first or the second coil part. The second electrical conductor could alternatively be connected pivotally or rigidly to any point of the first or the second coil part.

The second end 5d of the first coil part 5a is connected to one terminal of the power supply system 3 via the first electrical conductor 13a. The second end 5f of the second coil part 5b is connected to another terminal of the power supply system 3 via the second electrical conductor 13b. For each half cycle of the alternating current, the current thus flows from one terminal to one of the second ends 5d, 5f then along the corresponding coil part 5a, 5b, through the mechanically connected first ends 5c, 5e and back to the power supply system via the other coil part and its second end 5d, 5f.

The first HF coil 5 comprises a latch or locking member 5g. The latch 5g is configured to lock the first end 5c of the first coil part 5a to the first end 5e of the second coil part 5b. The latch 5g is a mechanical latch and may be of any type that keeps the two first ends 5c and 5e locked to each other. The latch 5g can be manoeuvred between a locking position in which it locks the first end 5c and 5e to each other, and an unlocked position in which the first coil part 5a and second coil part 5b are unlocked, enabling movement of the first coil part 5a relative to the second coil part 5b for opening the first HF coil 5. The movement may be rotational motion provided by the pivot connections 11a and 11b.

Instead of an openable configuration of the first HF coil, the first HF coil could alternatively be splittable into two or more parts.

The first coil part 5a is hollow. The first water pipe 9a is connected to the hollow interior of the first coil part 5a. The first water pipe 9a is connected to the first coil part 5a at the first end 5c. In the example, the first water pipe 9a is an inlet pipe. The first water pipe 9a may be connected to the first coil part 5a by means of pipe fittings.

The second coil part 5b is hollow. The second water pipe 9b is connected to the hollow interior of the second coil part 5b. The second water pipe 9b is connected to the second coil part 5b at the first end 5e. In the example, the second water pipe 9b is an outlet pipe. The second water pipe 9b may be connected to the second coil part 5b by means of pipe fittings.

The water-cooling system 9 comprises a first intermediate water pipe 9e connecting the first water pipe 9a with the second water pipe 9b. The first intermediate water pipe 9e extends between the second end 5d of the first coil part 5a and the second end 5f of the second coil part 5b connecting the hollow interior of the first coil part 5a with the hollow interior of the second coil part 5b. The first intermediate water pipe 9e may be a flexible pipe, such as a flexible hose.

According to the example during cooling, water flows into the first coil part 5a via the first water pipe 9a. The water then flows along the first coil part 5a and out from the first coil part 5a at its second end 5d via the first intermediate water pipe 9e. Next, the water flows into the second coil part 5b at its second end 5f from the first intermediate water pipe 9e and flows along the second coil part 5b. The water then exits the second coil part 5b at its first end 5e via the second water pipe 9b.

According to one variation, the first coil part 5a and the second coil part 5b could be cooled by separate water flows. In this case, a first water flow would enter e.g. at the first end of the first coil part 5a and exit at the second end of the first coil part 5a. A second water flow would enter e.g. at the first end of the second coil part 5b and exit at the second end of the second coil part 5b. The water flow would not be series connected as in the example shown in Fig. 2.

According to yet another variation, the water flow direction could be reversed. The first water pipe and the second water pipe could then be connected to a respective second end, and the first intermediate water pipe could connect the two first ends, or alternatively two separate water flows could be provided.

According to another variation, the first water pipe may be connected along any point of the first HF coil and the second water pipe may be connected along any point of the second HF coil. Moreover, depending on the configuration more than one intermediate water pipe may be used to connect water flow between the first HF coil to the second HF coil.

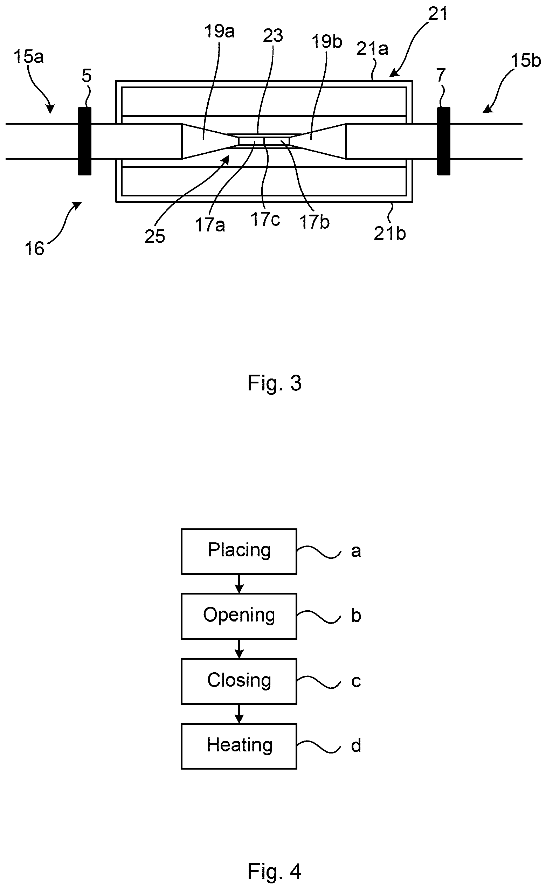

With reference to Figs 3 and 4, a method of restoring the insulation system of a power cable, using the induction heating system 1 will now be described.

In the example below, the restoration is in the context of jointing. The method would however involve the same steps in case the insulation system of a power cable that has been damaged is restored. Moreover, in the present example the insulation system is being cured by the heating but the method also works when using thermoplastic materials such as polypropylene.

Fig. 3 schematically shows a power cable 16 comprising two cable lengths 15a and 15b that are in the process of being jointed. In the state shown in Fig. 3, the conductors 17a and 17b of the two cable lengths 15a and 15b have been jointed and a conductor joint 17c has thus been created. The two conductors 17a, 17b thus form a single conductor.

The jointing of the conductors 17a, 17b may for example be performed by welding, brazing or by using mechanical connectors.

Each cable length 17a, 17b has an insulation system 19a, 19b which has been shaped conically adjacent to the conductor joint 17c. A region comprising the conically shaped insulation systems 19a, 19b and the conductor joint 17c is the power cable joint.

The joint insulation system, i.e. the insulation system around the conductor joint 17c and between the conically shaped ends of the insulation systems 19a and 19b is then rebuilt layer by layer.

A first restoration insulation system layer 23, which is uncured, is provided around the conductor joint 17c and arranged overlappingly with the corresponding insulation layer of the insulation systems 19a, 19b at their conically shaped ends. The first restoration insulation system layer 23 may for example be formed by tape wound around the exposed conductor.

Fig. 3 depicts a pressurisation and heating device 21. The pressurisation and heating device 21 comprises two parts 21a and 21b which can be opened and closed.

The pressurisation and heating device 21 has a heating chamber 25 formed by the two parts 21a and 21b, configured to receive the power cable joint. The heating chamber 25 may be pressurised to a plurality of bar, such as higher than 4 bar but lower than 15 bar, for example lower than 10 bar.

The heating chamber 25 may be filled with noble gas during curing, to prevent oxidation while rebuilding the insulation system over the conductor joint 17c. The noble gas may be pressurised.

The pressurisation and heating device 21 may comprise a heating device configured to heat the heating chamber 25 to a predefined temperature. The heating device may be configured to directly heat the heating chamber for example by means of heating coils or similar means. Alternatively, or additionally, the noble gas may be heated before it flows into the pressurisation and heating device 21.

In the jointing operation, in a step a) the pressurisation and heating device 21 is placed around the power cable joint after the first restoration insulation system layer 23 has been provided around the conductor joint 17c.

In a step b) the first HF coil 5 and the second HF coil 7 are opened and placed around the power cable formed by the two cable lengths 15a and 15b. The first HF coil 5 and the second HF coil 7 are arranged at opposite sides of the pressurisation and heating device 21. The first HF coil 5 and the second HF coil 7 may be arranged at an equal axial distance from the conductor joint 17c.

In a step c) the first HF coil 5 and the second HF coil 7 are closed.

It is to be noted that steps b) and c) could be performed before or after step a).

In a step d) the restoration insulation system layer 23 is heated by outer heating inside the pressurisation and heating device 21 and by inner heating of the restoration insulation system layer 23 provided by feeding the first HF coil 5 and the second HF coil 7 with current from the power supply system inducing current in the conductor. The restoration insulation system layer 23 is thereby cured.

In step d) the outer heating and the inner heating are typically performed simultaneously.

According to one variation the method comprises a step of cooling down the insulation system layer 23 after step d) has been performed, before the next restoration insulation system layer is provided onto the first restoration insulation system layer 23 and steps a)-d) are performed again.

In a step e) the first HF coil 5 and the second HF coil 7 are opened after the insulation system of the power cable joint has been restored. The first HF coil 5 and the second coil 7 are then removed from the power cable.

Steps a)-d) are performed for each of a plurality of restoration insulation system layers, each for example initially being uncured, of the power cable joint.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. A method of restoring an insulation system around a conductor of a power cable (16), using an induction heating system (1) for heating a conductor of a power cable (16) to restore an insulation system of the power cable (16), wherein the induction heating system (1) comprises: a first high frequency, HF, coil (5) configured to receive the power cable (16), a water-cooling system (9) configured to cool the first HF coil (1), and a power supply system (3) configured to power the first HF coil (1), wherein the first HF coil (5) is configured to be openable or splitable into at least two parts, the method comprising:
a) placing a pressurisation and heating device (21) around the power cable having a restoration insulation system layer (23) arranged around the conductor,
b) opening and placing the first HF coil (5) around the power cable (16) adjacent to the pressurisation and heating device (21),
c) closing the first HF coil (1), and
d) heating the restoration insulation system layer (23) by outer heating of the restoration insulation system layer (23) inside the pressurisation and heating device (21) and by inner heating of the restoration insulation system layer provided by feeding the first HF coil (5) with current from the power supply system (3) inducing a current in the conductor,
wherein the method comprises performing steps a)-d) for each of a plurality of restoration insulation system layers.

2. The method as claimed in claim 1, comprising e) opening the first HF coil (5) after the jointing operation has been performed, and removing the first HF coil from the power cable.

3. The method as claimed in claim 1 or 2, wherein in step d) the outer heating and the inner heating are performed simultaneously.

4. The method as claimed in any of the preceding claims, wherein the first HF coil (5) comprises a first coil part (5a) having a first end (5c) and a second coil part (5b) having a first end (5e), the first end (5c) of the first coil part (5a) being configured to be connected to the first end (5e) of the second coil part (5b), and wherein the first end (5c) of the first coil part (5a) is mechanically disconnectable from the first end(5e) of the second coil part (5b).

5. The method as claimed in claim 4, wherein the first coil part (5a) has a second end (5d) having a pivot connection (11a) to enable rotation of the first coil part (5a) away from the second coil part (5b) when the first ends (5c, 5e) of the first coil part (5a) and the second coil part (5b) have been disconnected from each other.

6. The method as claimed in claim 4 or 5, wherein the first HF coil (5) comprises a latch (5g) configured to lock the first end (5c) of the first coil part (5a) to the first end (5e) of the second coil part (5b).

7. The method as claimed in any claims 4-6, wherein the first coil part (5a) and the second coil part (5b) are hollow, wherein the water-cooling system (9) comprises a first water pipe (9a) connected to the first coil part (5a) and a second water pipe (9b) connected to the second coil part (5b) for flowing water through the first coil part (5a) and the second coil part (5b).

8. The method as claimed in claim 7 dependent of claim 4, wherein the first coil part (5a) has a second end (5d) and the second coil part (5b) has a second end (5f), and wherein the water-cooling system (9) comprises a first intermediate water pipe (9e) connecting the first water pipe (9a) with the second water pipe (9b), the first intermediate water pipe (9e) extending between the second end (5d) of the first coil part (5a) and the second end (5f) of the second coil part (5b) connecting the hollow interior of the first coil part (5a) with the hollow interior of the second coil part (5b).

9. The method as claimed in any of the preceding claims, wherein the induction heating system (1) comprises a second HF coil (7) configured to receive the power cable (16), wherein the power supply system (3) is configured to power the second HF coil (7), and wherein the second HF coil (7) is configured to be openable or splitable into at least two parts.

10. The method as claimed in claim 9, wherein the water-cooling system (3) is configured to cool the second HF coil (7), wherein the second HF coil (7) has a third coil part and a fourth coil part, each having a respective first end, the first end of the third coil part being configured to be connected to the first end of the fourth coil part, and wherein the first end of the third coil part is mechanically disconnectable from the first end of the fourth coil part.

11. The method as claimed in claim 10, wherein the second HF coil (7) comprises a latch configured to lock the first end of the third coil part to the first end of the fourth coil part.

12. The method as claimed in any of claims 9-11, wherein the third coil part and the fourth coil part are hollow, wherein the water-cooling system comprises a third water pipe (9c) connected to the third coil part and a fourth water pipe (9d) connected to the fourth coil part for flowing water through the third coil part and the fourth coil part.

13. The method as claimed in any of claims 9-12, comprising opening and placing the second HF coil (7) around the power cable (16) adjacent to the pressurisation and heating device (21)), wherein the first HF coil (5) is placed at a first side of the conductor joint (17a) and the second HF joint (7) is placed at a second side of the conductor joint (17a), and closing the second HF coil (7), wherein step d) involves feeding the second HF coil (7) with current from the power supply system (3).

## Patentansprüche

1. Verfahren zum Wiederherstellen eines Isolierungssystems um einen Leiter eines Stromkabels (16) unter Verwendung eines Induktionserwärmungssystems (1) zum Erwärmen eines Leiters eines Stromkabels (16), um ein Isolierungssystem des Stromkabels (16) wiederherzustellen, wobei das Induktionserwärmungssystem (1) Folgendes umfasst: eine erste Hochfrequenz-, HF-, Spule (5), die so konfiguriert ist, dass sie das Stromkabel (16) aufnimmt, ein Wasserkühlsystem (9), das so konfiguriert ist, dass es die erste HF-Spule (5) kühlt, und ein Stromversorgungssystem (3), das so konfiguriert ist, dass es die erste HF-Spule (5) mit Strom versorgt, wobei die erste HF-Spule (5) so konfiguriert ist, dass sie in mindestens zwei Teile geöffnet oder geteilt werden kann, wobei das Verfahren Folgendes umfasst:
a) Platzieren einer Druckbeaufschlagungs- und Erwärmungsvorrichtung (21) um das Stromkabel mit einer Wiederherstellungs-Isolierungssystemschicht (23), die um den Leiter angeordnet ist,
b) Öffnen und Platzieren der ersten HF-Spule (5) um das Stromkabel (16) benachbart zur Druckbeaufschlagungs- und Erwärmungsvorrichtung (21),
c) Schließen der ersten HF-Spule (5), und
d) Erwärmen der Wiederherstellungs-Isolierungssystemschicht (23) durch äußeres Erwärmen der Wiederherstellungs-Isolierungssystemschicht (23) innerhalb der Druckbeaufschlagungs- und Erwärmungsvorrichtung (21) und durch inneres Erwärmen der Wiederherstellungs-Isolierungssystemschicht, die durch Speisen der ersten HF-Spule (5) mit Strom aus dem Stromversorgungssystem (3) bereitgestellt wird, das einen Strom in dem Leiter induziert,
wobei das Verfahren das Durchführen der Schritte a)-d) für jede der Vielzahl von Wiederherstellungs-Isolierungssystemschichten umfasst.

2. Verfahren nach Anspruch 1, umfassend das e) Öffnen der ersten HF-Spule (5) nachdem der Verbindungsvorgang durchgeführt wurde, und Entfernen der ersten HF-Spule von dem Stromkabel.

3. Verfahren nach Anspruch 1 oder 2, wobei in Schritt d) das äußere Erwärmen und das innere Erwärmen gleichzeitig durchgeführt werden.

4. Verfahren nach einem der vorhergehenden Ansprüche, wobei die erste HF-Spule (5) ein erstes Spulenteil (5a) mit einem ersten Ende (5c) und ein zweites Spulenteil (5b) mit einem ersten Ende (5e) umfasst, wobei das erste Ende (5c) des ersten Spulenteils (5a) so konfiguriert ist, dass es mit dem ersten Ende (5e) des zweiten Spulenteils (5b) verbunden ist, und wobei das erste Ende (5c) des ersten Spulenteils (5a) von dem ersten Ende (5e) des zweiten Spulenteils (5b) mechanisch trennbar ist.

5. Verfahren nach Anspruch 4, wobei das erste Spulenteil (5a) ein zweites Ende (5d) mit einer Schwenkverbindung (11a) aufweist, um eine Drehung des ersten Spulenteils (5a) weg von dem zweiten Spulenteil (5b) zu ermöglichen, wenn die ersten Enden (5c, 5e) des ersten Spulenteils (5a) und des zweiten Spulenteils (5b) voneinander getrennt worden sind.

6. Verfahren nach Anspruch 4 oder 5, wobei die erste HF-Spule (5) eine Verriegelung (5g) umfasst, die so konfiguriert ist, dass sie das erste Ende (5c) des ersten Spulenteils (5a) mit dem ersten Ende (5e) des zweiten Spulenteils (5b) verriegelt.

7. Verfahren nach einem der Ansprüche 4-6, wobei das erste Spulenteil (5a) und das zweite Spulenteil (5b) hohl sind, wobei das Wasserkühlsystem (9) eine erste Wasserleitung (9a) umfasst, die mit dem ersten Spulenteil (5a) verbunden ist, und eine zweite Wasserleitung (9b) umfasst, die mit dem zweiten Spulenteil (5b) zum Durchleiten von Wasser durch das erste Spulenteil (5a) und das zweite Spulenteil (5b) verbunden ist.

8. Verfahren nach Anspruch 7 abhängig von Anspruch 4, wobei das erste Spulenteil (5a) ein zweites Ende (5d) und das zweite Spulenteil (5b) ein zweites Ende (5f) aufweist, und wobei das Wasserkühlsystem (9) eine erste Zwischenwasserleistung (9e) umfasst, die die erste Wasserleitung (9a) mit der zweiten Wasserleitung (9b) verbindet, die erste Zwischenwasserleitung (9e) sich zwischen dem zweiten Ende (5d) des ersten Spulenteils (5a) und dem zweiten Ende (5f) des zweiten Spulenteils (5b) erstreckt und den hohlen Innenraum des ersten Spulenteils (5a) mit dem hohlen Innenraum des zweiten Spulenteils (5b) verbindet.

9. Verfahren nach einem der vorhergehenden Ansprüche, wobei das Induktionserwärmungssystem (1) eine zweite HF-Spule (7) umfasst, die so konfiguriert ist, dass sie das Stromkabel (16) aufnimmt, wobei das Stromversorgungssystem (3) so konfiguriert ist, dass es die zweite HF-Spule (7) mit Strom versorgt, und wobei die zweite HF-Spule (7) so konfiguriert ist, dass sie in mindestens zwei Teile geöffnet oder geteilt werden kann.

10. Verfahren nach Anspruch 9, wobei das Wasserkühlsystem (3) so konfiguriert ist, dass es die zweite HF-Spule (7) kühlt, wobei die zweite HF-Spule (7) ein drittes Spulenteil und ein viertes Spulenteil aufweist, die jeweils ein erstes Ende aufweisen, wobei das erste Ende des dritten Spulenteils so konfiguriert ist, dass es mit dem ersten Ende des vierten Spulenteils verbunden ist, und wobei das erste Ende des dritten Spulenteils von dem ersten Ende des vierten Spulenteils mechanisch trennbar ist.

11. Verfahren nach Anspruch 10, wobei die zweite HF-Spule (7) eine Verriegelung umfasst, die so konfiguriert ist, dass sie das erste Ende des dritten Spulenteils mit dem ersten Ende des vierten Spulenteils verriegelt.

12. Verfahren nach einem der Ansprüche 9-11, wobei das dritte Spulenteil und das vierte Spulenteil hohl sind, wobei das Wasserkühlsystem eine dritte Wasserleitung (9c) umfasst, die mit dem dritten Spulenteil verbunden ist, und eine vierte Wasserleitung (9d) umfasst, die mit dem vierten Spulenteil zum Durchleiten von Wasser durch das dritte Spulenteil und das vierte Spulenteil verbunden ist.

13. Verfahren nach einem der Ansprüche 9-12, umfassend das Öffnen und Platzieren der zweiten HF-Spule (7) um das Stromkabel (16) benachbart zur Druckbeaufschlagungs- und Erwärmungsvorrichtung (21), wobei die erste HF-Spule (5) an einer ersten Seite der Leiterverbindung (17a) und die zweite HF-Verbindung (7) an einer zweiten Seite der Leiterverbindung (17a) platziert ist, und das Schließen der zweiten HF-Spule (7), wobei Schritt d) das Speisen der zweiten HF-Spule (7) mit Strom aus dem Stromversorgungssystem (3) einschließt.

## Revendications

1. Procédé de restauration d'un système d'isolation autour d'un conducteur d'un câble électrique (16), à l'aide d'un système de chauffage par induction (1) pour chauffer un conducteur d'un câble électrique (16) pour restaurer un système d'isolation du câble électrique (16), dans lequel le système de chauffage par induction (1) comprend : une première bobine haute fréquence, HF, (5) configurée pour recevoir le câble électrique (16), un système de refroidissement à l'eau (9) configuré pour refroidir la première bobine HF (5), et un système d'alimentation électrique (3) configuré pour alimenter la première bobine HF (5), dans lequel la première bobine HF (5) est configurée pour pouvoir être ouverte ou séparée en au moins deux parties, le procédé comprenant :
a) le placement d'un dispositif de pressurisation et de chauffage (21) autour du câble électrique présentant une couche de restauration de système d'isolation (23) agencée autour du conducteur,
b) l'ouverture et le placement de la première bobine HF (5) autour du câble électrique (16) adjacente au dispositif de pressurisation et de chauffage (21),
c) la fermeture de la première bobine HF (5), et
d) le chauffage de la couche de restauration de système d'isolation (23) par le chauffage externe de la couche de restauration de système d'isolation (23) à l'intérieur du dispositif de pressurisation et de chauffage (21) et par le chauffage interne de la couche de restauration de système d'isolation par l'alimentation de la première bobine HF (5) en courant provenant du système d'alimentation électrique (3) induisant un courant dans le conducteur,
dans lequel le procédé comprend la réalisation des étapes a) à d) pour chacune d'une pluralité de couches de restauration de système d'isolation.

2. Procédé selon la revendication 1, comprenant e) l'ouverture de la première bobine HF (5) après la réalisation de l'opération d'assemblage, et le retrait de la première bobine HF du câble électrique.

3. Procédé selon la revendication 1 ou 2, dans lequel, à l'étape d), le chauffage externe et le chauffage interne sont réalisés simultanément.

4. Procédé selon l'une quelconque des revendications précédentes, dans lequel la première bobine HF (5) comprend une première partie de bobine (5a) présentant une première extrémité (5c) et une deuxième partie de bobine (5b) présentant une première extrémité (5e), la première extrémité (5c) de la première partie de bobine (5a) étant configurée pour être connectée à la première extrémité (5e) de la deuxième partie de bobine (5b), et dans lequel la première extrémité (5c) de la première partie de bobine (5a) peut être mécaniquement déconnectée de la première extrémité (5e) de la deuxième partie de bobine (5b).

5. Procédé selon la revendication 4, dans lequel la première partie de bobine (5a) présente une deuxième extrémité (5d) présentant une connexion à pivot (11a) pour permettre une rotation de la première partie de bobine (5a) à l'écart de la deuxième partie de bobine (5b) lorsque les premières extrémités (5c, 5e) de la première partie de bobine (5a) et de la deuxième partie de bobine (5b) ont été déconnectées l'une de l'autre.

6. Procédé selon la revendication 4 ou 5, dans lequel la première bobine HF (5) comprend un loquet (5g) configuré pour verrouiller la première extrémité (5c) de la première partie de bobine (5a) à la première extrémité (5e) de la deuxième partie de bobine (5b).

7. Procédé selon l'une quelconque des revendications 4 à 6, dans lequel la première partie de bobine (5a) et la deuxième partie de bobine (5b) sont creuses, dans lequel le système de refroidissement à l'eau (9) comprend un premier tuyau d'eau (9a) connecté à la première partie de bobine (5a) et un deuxième tuyau d'eau (9b) connecté à la deuxième partie de bobine (5b) pour faire circuler de l'eau à travers la première partie de bobine (5a) et la deuxième partie de bobine (5b).

8. Procédé selon la revendication 7 dépendant de la revendication 4, dans lequel la première partie de bobine (5a) présente une deuxième extrémité (5d) et la deuxième partie de bobine (5b) présente une deuxième extrémité (5f), et dans lequel le système de refroidissement à l'eau (9) comprend un premier tuyau d'eau intermédiaire (9e) connectant le premier tuyau d'eau (9a) au deuxième tuyau d'eau (9b), le premier tuyau d'eau intermédiaire (9e) s'étendant entre la deuxième extrémité (5d) de la première partie de bobine (5a) et la deuxième extrémité (5f) de la deuxième partie de bobine (5b) connectant l'intérieur creux de la première partie de bobine (5a) à l'intérieur creux de la deuxième partie de bobine (5b).

9. Procédé selon l'une quelconque des revendications précédentes, dans lequel le système de chauffage par induction (1) comprend une deuxième bobine HF (7) configurée pour recevoir le câble électrique (16), dans lequel le système d'alimentation électrique (3) est configuré pour alimenter la deuxième bobine HF (7), et dans lequel la deuxième bobine HF (7) est configurée pour pouvoir être ouverte ou séparée en au moins deux parties.

10. Procédé selon la revendication 9, dans lequel le système de refroidissement à l'eau (3) est configuré pour refroidir la deuxième bobine HF (7), dans lequel la deuxième bobine HF (7) présente une troisième partie de bobine et une quatrième partie de bobine, présentant chacune une première extrémité respective, la première extrémité de la troisième partie de bobine étant configurée pour être connectée à la première extrémité de la quatrième partie de bobine, et dans lequel la première extrémité de la troisième partie de bobine peut être mécaniquement déconnectée de la première extrémité de la quatrième partie de bobine.

11. Procédé selon la revendication 10, dans lequel la deuxième bobine HF (7) comprend un loquet configuré pour verrouiller la première extrémité de la troisième partie de bobine à la première extrémité de la quatrième partie de bobine.

12. Procédé selon l'une quelconque des revendications 9 à 11, dans lequel la troisième partie de bobine et la quatrième partie de bobine sont creuses, dans lequel le système de refroidissement à l'eau comprend un troisième tuyau d'eau (9c) connecté à la troisième partie de bobine et un quatrième tuyau d'eau (9d) connecté à la quatrième partie de bobine pour faire circuler de l'eau à travers la troisième partie de bobine et la quatrième partie de bobine.

13. Procédé selon l'une quelconque des revendications 9 à 12, comprenant l'ouverture et le placement de la deuxième bobine HF (7) autour du câble électrique (16) adjacente au dispositif de pressurisation et de chauffage (21), dans lequel la première bobine HF (5) est placée au niveau d'un premier côté du raccord de conducteur (17a) et la deuxième bobine HF (7) est placée au niveau d'un deuxième côté du raccord de conducteur (17a), et la fermeture de la deuxième bobine HF (7), dans lequel l'étape d) implique l'alimentation de la deuxième bobine HF (7) en courant provenant du système d'alimentation électrique (3).
